# EUROPEAN PATENT APPLICATION

(11) **EP 2 006 129 A1**
(43) Date of publication of application: **24.12.2008**
(21) Application number: 08075484.9
(22) Date of filing: 08.05.2008
(51) Int. Cl.: B60G 7/02, B60G 9/00, B60G 11/10

(54) **Spring carrier arm**

(30) Priority: 08.05.2007 NL 1033820
(71) Applicant: Weweler Nederland B.V., 7332 AP Apeldoorn (NL)
(72) Inventor: Everts, Geert, 7722 LL Dalfsen (NL)
(74) Representative: Houben, Christiaan Hein Willem Frans

(57) **Abstract**

A spring carrier arm (1,101) for the hinged suspension of a longitudinal carrier arm of an axle suspension system for a motor vehicle comprises an outermost part (2,102), and an innermost part (3,103), said innermost part, when seen in the transverse direction of the vehicle, being located on the inside in relation to the outermost part. The innermost part is connected at the uppermost end to the outermost part. The outermost part and the innermost part of the spring carrier arm each comprise a plate-shaped clamping part (4,5,104,105) near the underside. The plate-shaped clamping parts extend essentially parallel to one another and form between them a space for a hinge loop of the longitudinal carrier arm, and each have an opening (106,107) for the insertion of a hinge pin to be inserted through the hinge loop. The innermost part of the spring carrier arm is preferably manufactured as a casting and is provided with an integral mounting flange (9,109) for attachment of a strut element extending in the transverse direction of the vehicle.

## Description

The invention relates to a spring carrier arm for hingedly suspending of a longitudinal carrier arm of an axle suspension for a motor vehicle, comprising an outermost part and an innermost part, said innermost part, when seen in the transverse direction of the vehicle, being located on the inside in relation to the outermost part, and being connected to the outermost part at its upper end, wherein the outermost part and the innermost part of the spring carrier arm each comprise a plate-shaped clamping part near the underside, said plate-shaped clamping parts extending substantially parallel to one another and forming between them a space for a hinge eye of the longitudinal carrier arm, and each having an opening for running through a hinge pin to be run through the hinge eye.

A spring carrier arm of this type is known. For example, a spring carrier arm is known from EP 995 664 that comprises two plates that at their upper side are connected to a horizontal underside of a chassis beam.

An object of the invention is to provide an alternative spring carrier arm.

This object is achieved by a spring carrier arm according to the preamble of claim 1, wherein the innermost part of the spring carrier arm is provided with an integral mounting flange for attachment of a strut element extending in transverse direction of the vehicle.

In a preferred embodiment, the outermost part of the spring carrier arm is made of plate material and can be attached to a chassis part of the vehicle, and the innermost part of the spring carrier arm is manufactured as a casting and provided with an integral mounting flange.

In another preferred embodiment, outermost part and innermost part are formed integrally, in particular as a casting.

Further embodiments and advantages of the invention will become apparent in the following description with reference to the drawing, where:
Fig. 1 shows a perspective view of a part of a spring carrier arm according to a preferred embodiment of the invention attached to a chassis beam,
Fig. 2 shows another perspective view of the spring carrier arm of Fig. 1,
Fig. 3 shows a side view of the spring carrier arm of Fig. 1,
Fig. 4 shows a perspective view of another preferred embodiment of a spring carrier arm according to the invention, and
Fig. 5 shows a further perspective view of the spring carrier arm of Fig. 4.

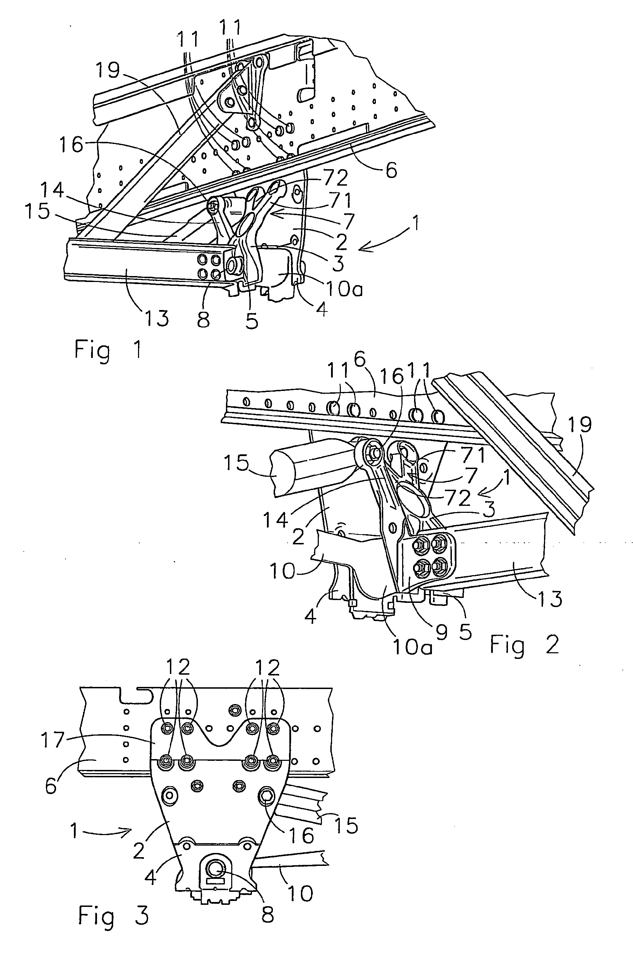

Figures 1-3 show a spring carrier arm 1 for hinged suspension of a longitudinal carrier arm 10 of an axle suspension of a vehicle. At the other end (not shown) of the longitudinal carrier arm 10 it is connected in a manner known perse via an air bellows to the chassis. The longitudinal carrier arm 10 is preferably flexible and, for example, formed by rolling as a parabolic spring. The longitudinal carrier arm 10 can be essentially straight, but can also be curved, both of which forms are essentially known from the prior art. An axle body of the wheel axle is clamped against the longitudinal carrier arm by means of suitable clamping means (not shown).

The spring carrier arm 1 comprises an outermost part 2 and an innermost part 3, said innermost part, when seen in the transverse direction of the vehicle, being located on the inside in relation to the outermost part and being connected to the outermost part 2 at its upper end. The outermost part 2 and the innermost part 3 of the spring carrier arm 1 each comprise a plate-shaped clamping part 4 and 5 near the underside. The plate-shaped clamping parts 4 and 5 extend substantially parallel to one another and form between them a space for a hinge eye 10a of the longitudinal carrier arm 10. The clamping parts 4 and 5 each have an opening for running through a hinge pin 8 to be run through the hinge eye.

The outermost part 2 of the spring carrier arm 1 is made of plate material and is attached to a chassis beam 6 of the vehicle. The outermost part has on its upper side a substantially flat attachment zone 17 that is in contact with a vertical surface of the chassis beam 6. In the case shown the chassis beam 6 has a U-shaped cross-section, but could also, for example, have a Z-shaped or L-shaped cross-section. The attachment zone of the outermost part has openings for running through bolts 11 with which the attachment zone is clamped against the vertical surface of the chassis beam 6 in assembled state by means of nuts 12. The chassis beam 6 has rows of holes, offering the possibility of attaching the spring carrier arm in different positions. An advantage of the attachment by means of bolts of the spring carrier arm 1 to the chassis beam 6 is that the latter generally has a protective coating. In the case of a bolted attachment, this coating is not damaged as would be the case, for example, in the event of welding. This permits a more expedient manufacture.

The innermost part 3 of the spring carrier arm 1 is manufactured as a casting. Manufacturing by casting offers the possibility of manufacturing more complex forms relatively simply without a great deal of finishing. A disadvantage of the casting, however, is the lower strength in transverse direction compared with plate material. In axle suspension systems for trailers, for example, transverse loads occur frequently.

The innermost part 3 of the spring carrier arm 1 comprises an inclined part 7 that extends from the plate-shaped clamping part 5 at an angle upwards in the direction of the outermost part 2. In the preferred embodiment shown, the inclined part 7 of the innermost part has two arms 71 and 72. The uppermost side of the respective arms 71, 72 is attached to the outermost part 2 of the spring carrier arm 1 by means of a bolted joint. This construction makes it possible to attach the spring carrier arm 1 to U, Z or L-shaped chassis beams via the outermost part 2 of the spring carrier arm 1.

The innermost part 3 of the spring carrier arm 1 comprises furthermore an arm 14 extending from the plate-shaped clamping part 5 substantially parallel to the plate-shaped clamping part 5 and, in assembled state, extending to the rear - in relation to the direction of travel of the vehicle - and at an angle upwards, and at its uppermost end has an opening for running through a hinge bolt 16 for attachment of a shock absorber 15. Opposite said opening in the innermost part 3 of the spring carrier arm 1, the outermost part 2 has an opening through which the hinge bolt 16 for the shock absorber 15 is also passed.

The innermost part 3 of the spring carrier arm 1 has an integral mounting flange 9 for the attachment of a strut element 13 extending in a transverse direction of the vehicle. The strut element 13 allows transverse forces exerted by the longitudinal carrier arm 10 on the spring carrier arm 1 to be absorbed, while the innermost part 3 is a cast part. The mounting flange 9 for the strut element 13 extends substantially perpendicularly in relation to the clamping part 5, and in assembled state in the transverse direction of the vehicle. In the embodiment shown, the strut element 13 is designed as a transverse beam extending between two spring carrier arms 1 installed on opposite sides of the vehicle and fastened with bolts to their respective mounting flanges 9. In the case shown, the strut element 13 has a U-shaped cross-section, the neutral line of which preferably intersecting the centre line of the hinge bolt 8 so that transverse forces transmitted by the carrier arm 10 to the spring carrier arm 1 are directly absorbed where they occur and force moments are avoided as far as possible. This generally permits a lighter construction to be used. The rigidity of the construction is further increased by inclined strut elements 19 that are connected at one end to the strut element 13 and at the other end to the higher positioned chassis beam 6.

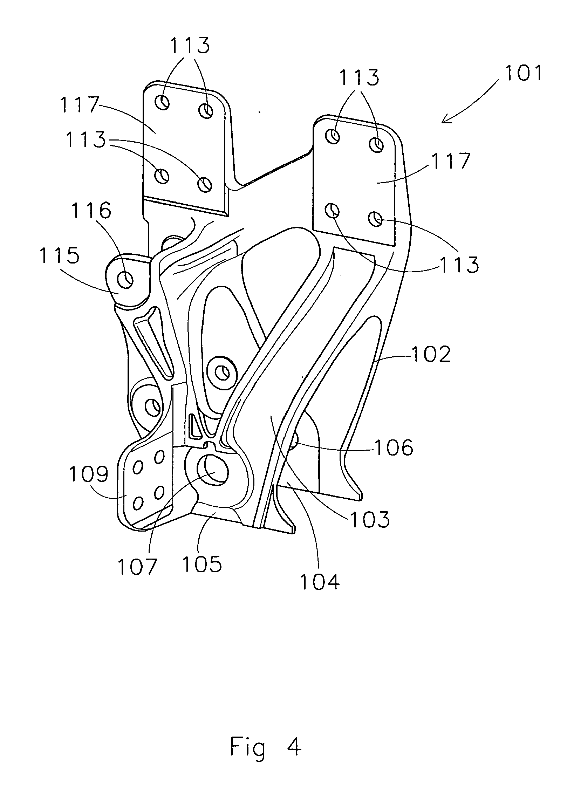

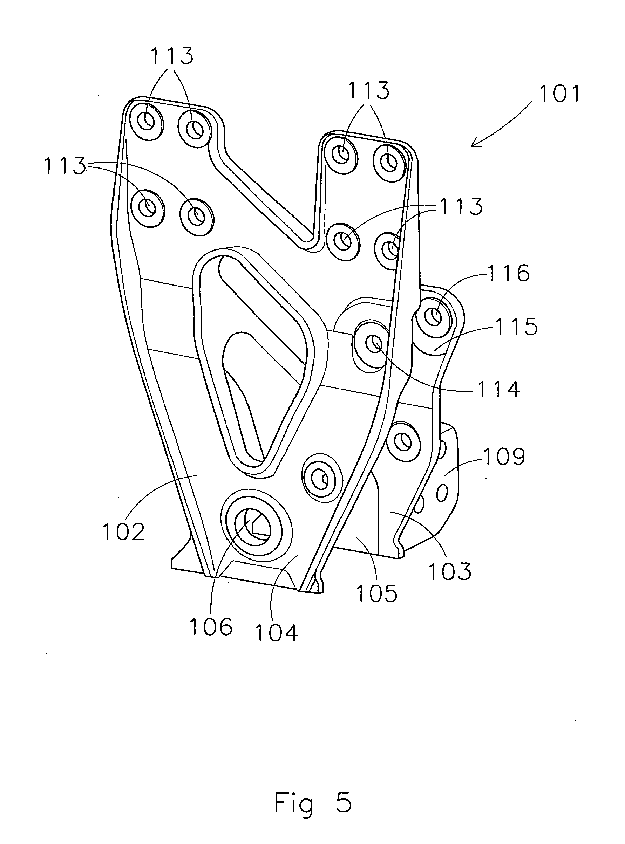

Figs. 4 and 5 show another spring carrier arm 101. This spring carrier arm 101 has an outermost part 102 and an innermost part 103, said innermost part, when seen in the transverse direction of the vehicle, being located on the inside in relation to the outermost part 102, and being connected to the outermost part at its uppermost end is joined integrally to the outermost part 102. In this preferred embodiment, the outermost part 102 and the innermost part 103 are formed in one piece, preferably by casting. The outermost part 102 and the innermost part 103 of the spring carrier arm 101 each comprise a plate-shaped clamping part 104 and 105 near the underside. The plate-shaped clamping parts 104 and 105 extend substantially parallel to one another and form between them a space for a hinge eye of the longitudinal carrier arm. The clamping parts 104 and 105 each have an opening 106 and 107 for running through a hinge pin to be run through the hinge eye.

The outermost part 102 has on its upper side a substantially flat attachment zone 117 that in assembled state is in contact with a vertical surface of the chassis beam. The attachment zone 117 of the outermost part has openings 113 for passing through bolts with which the attachment zone is clamped against the vertical surface of the chassis beam in assembled state by means of nuts. The chassis beam has rows of holes, offering the possibility of attaching the spring carrier arm in different positions (cf. Fig. 1).

The innermost part 103 of the spring carrier arm 101 has an integral mounting flange 109 for the attachment of a strut element extending in the transverse direction of the vehicle. The strut element allows transverse forces exerted by the longitudinal carrier arm on the spring carrier arm 101 to be absorbed. The mounting flange 109 for the strut element extends substantially perpendicularly in relation to the clamping part 105, and in assembled state in transverse direction of the vehicle.

The innermost part 103 has a projection in the form of an ear 115 that extends from the plate-shaped clamping part 5 substantially parallel to the plate-shaped clamping part 5 and, in assembled state, extending to the rear - in relation to the direction of travel of the vehicle - and at an angle upwards, and at its upper end has an opening 116 for running through a hinge bolt for attachment of a shock absorber. Opposite said opening 116 in the ear 115 of the innermost part 103 of the spring carrier arm 101, the outermost part 102 has an opening 114 through which the hinge bolt for the shock absorber is also passed.

## Claims

1. Spring carrier arm (1; 101) for hingedly suspending a longitudinal carrier arm of an axle suspension of a motor vehicle comprising an outermost part (2; 102), and an innermost part (3; 103), said innermost part, when seen in the transverse direction of the vehicle, being located on the inside in relation to the outermost part (2; 102), and being connected to the outermost part (2; 102) at its upper end, wherein the outermost part (2; 102) and the innermost part (3; 103) of the spring carrier arm (1; 101) each comprise a plate-shaped clamping part (4, 5; 104, 105) near the underside, said plate-shaped clamping parts extending substantially parallel to one another and forming between them a space for a hinge eye of the longitudinal carrier arm, and each having an opening (106, 107) for running through a hinge pin to be run through the hinge eye, **characterised in that** the innermost part (3; 103) of the spring carrier arm (1; 101) has an integral mounting flange (9; 109) for the attachment of a strut element extending in transverse direction of the vehicle.

2. Spring carrier arm according to claim 1, **characterised in that** the mounting flange (9; 109) for the strut element extends substantially perpendicularly in relation to the clamping part (5; 105) and in assembled state in transverse direction of the vehicle.

3. Spring carrier arm according to claim 1 or 2, **characterised in that** the outermost part (2) of the spring carrier arm (1) is made of plate material and can be attached to a chassis part (6) of the vehicle and that the innermost part (3) of the spring carrier arm (1) is manufactured as a casting.

4. Spring carrier arm according to claim 3, **characterised in that** the innermost part (3) of the spring carrier arm (1) comprises an inclined part (7) that extends from the plate-shaped clamping part (5) at an angle upwards in the direction of the outermost part (2) and at its upper end is connected to the outermost part (2) of the spring carries arm (1) by means of a clamped connection, in particular a bolted connection.

5. Spring carrier arm according to claim 4, **characterised in that** the inclined part (7) of the innermost part (3) has several arms (71, 72), preferably two arms.

6. Spring carrier arm according to one or more of claims 3-5, **characterised in that** the innermost part (3) of the spring carrier arm (1) has an arm (14) that extends substantially parallel to the plate-shaped clamping part (5) and, in assembled state, extends to the rear - in relation to the direction of travel of the vehicle - and at an angle upwards, and at its upper end has an opening for the attachment of a shock absorber (15).

7. Spring carrier arm according to claim 1 or 2, **characterised in that** the outermost part (102) and the innermost part (103) are formed integrally.

8. Spring carrier arm according to claim 7, **characterised in that** the spring carrier arm (101) is formed as a casting.

9. Spring carrier arm according to one or more of the above claims, **characterised in that** the outermost part has on its upper side a substantially flat attachment zone (17; 117) to lie against a vertical surface of a chassis part (6), said attachment zone (17; 117) having openings (113) for running through bolts (11) with which the attachment zone (17; 117) is clamped in assembled state against the vertical surface of the chassis part (6).

10. Wheel axle suspension of a vehicle comprising two spring carrier arms (1; 101) according to one or more of the above claims, **characterised in that** said spring carrier arms (1; 101) are each attached to a chassis beam (6) extending in longitudinal direction and are joined together by means of a strut beam (13) extending in transverse direction that is connected to the mounting flange (9; 109) of each of the spring carrier arms (1; 101) by means of bolts, wherein the wheel axle suspension furthermore comprises a longitudinal carrier arm (10) on each side that extends in longitudinal direction of the vehicle and is hingedly connected to the spring carrier arm (1; 101) by means of a hinge pin (8), said wheel axle suspension having furthermore two spring bellows each of which is attached to the other end of one of the longitudinal carrier arms (10) and are connected to the chassis .
